(19) Europäisches Patentamt
European Patent Office
Office européen des brevets

(11) **EP 2 199 580 A1**

(12) **EUROPÄISCHE PATENTANMELDUNG**

(43) Veröffentlichungstag:
23.06.2010 Patentblatt 2010/25

(51) Int Cl.:
*F02D 41/14* (2006.01)  *F02D 41/24* (2006.01)
*F02D 33/02* (2006.01)  *F02D 19/02* (2006.01)

(21) Anmeldenummer: 08021784.7

(22) Anmeldetag: 16.12.2008

(84) Benannte Vertragsstaaten:
AT BE BG CH CY CZ DE DK EE ES FI FR GB GR HR HU IE IS IT LI LT LU LV MC MT NL NO PL PT RO SE SI SK TR
Benannte Erstreckungsstaaten:
AL BA MK RS

(71) Anmelder: **GE Jenbacher GmbH & Co. OHG**
**6200 Jenbach (AT)**

(72) Erfinder:
• **Chvatal, Dieter**
  **6020 Jenbach (AT)**

• **Gföller, Helmut**
  **6020 Innsbruck (AT)**
• **Hirzinger, Johann**
  **6345 Kössen (AT)**
• **Waldhart, Michael**
  **6410 Telfs (AT)**
• **Weigl, Christoph**
  **6200 Jenbach (AT)**

(74) Vertreter: **Hofinger, Stephan et al**
**Torggler & Hofinger**
**Patentanwälte**
**Wilhelm-Greil-Strasse 16**
**6020 Innsbruck (AT)**

(54) **Verfahren zum Betreiben einer Brennkraftmaschine**

(57) Verfahren zum Betreiben einer Brennkraftmaschine (1) unter Zufuhr eines Treibstoff-Luftgemischs, wobei zumindest zwei verschiedene Betriebszustände vorgesehen sind, wobei im ersten Betriebszustand ein IST-Abgasemissionswert der Brennkraftmaschine (1) gemessen wird und das Verhältnis ($\lambda$) von Treibstoff zu Luft des zugeführten Treibstoff-Luftgemischs und/oder die Treibstoffmenge in Abhängigkeit dieses Abgasemissionswertes zum Erreichen des SOLL-Abgasemissionswerts nachgeregelt wird, wobei gleichzeitig der Druck (P) des Treibstoff-Luftgemischs vor den Einlassventilen der Brennkraftmaschine (1) und ein Leistungsäquivalent (L) der Brennkraftmaschine (1) ermittelt werden und aus dem IST-Abgasemissionswert und den zugehörigen Werten von Druck (P) vor den Einlassventilen der Brennkraftmaschine und Leistungsäquivalent (L) der Brennkraftmaschine (1) ein Kennlinienfeld erstellt wird, wobei im zweiten Betriebszustand der Druck (P) des Treibstoff-Luftgemischs vor den Einlassventilen der Brennkraftmaschine (1) und das Verhältnis ($\lambda$) von Treibstoff zu Luft und/oder die Treibstoffmenge unter Rückgriff auf das Kennlinienfeld eingestellt werden, um den SOLL-Abgasemissionswert anzusteuern.

*Fig. 1*

**Beschreibung**

Die Erfindung betrifft ein Verfahren zum Betreiben einer Brennkraftmaschine unter Zufuhr eines Treibstoff-Luftgemischs. Weiters betrifft die Erfindung eine Regeleinrichtung zur Durchführung dieses Verfahrens. Schließlich betrifft die Erfindung eine Brennkraftmaschine, umfassend eine Vorrichtung zum Verändern der Menge und des Verhältnisses des Treibstoff-Luftgemischs, das der Brennkraftmaschine zugeführt wird, einen Druckmesser zum Erfassen des Gemischdrucks vor den Einlassventilen der Brennkraftmaschine und eine Vorrichtung zum Erfassen des Leistungsäquivalents der Brennkraftmaschine. Schließlich betrifft die Erfindung eine stationäre Kraftanlage, umfassend eine solche Brennkraftmaschine.

Aus der EP 0 259 382 B1 ist es bereits bekannt, eine Brennkraftmaschine zum Antrieb eines elektrischen Generators mit konstanten Stickoxidemissionswerten zu betreiben, indem man den Gemischdruck vor den Einlassventilen der Zylinder in Abhängigkeit der vom Generator abgegeben elektrischen Leistung regelt. Hierbei wird der Sollwert des Gemischdrucks vor den Einlassventilen aus einem Kennlinienfeld, das die Abhängigkeit des Gemischdrucks von der abgegebenen elektrischen Leistung bei konstanten Emissionswerten zeigt, entnommen. Über eine Verstellung des Brennstoff-Luftverhältnisses in einem Gasmischer wird dann der gemessene Ist-Wert des Drucks vor den Einlassventilen auf seinen über das Kennlinienfeld bestimmten Sollwert geregelt. Die hierfür verwendete Kennlinie wird unter Einmessen von zumindest zwei Betriebspunkten mit gleichen $NO_x$-Emissionswerten erzeugt. Durch dieses bisher bekannte Verfahren ist es möglich, dass eine Brennkraftmaschine die gewünschten Emissionswerte in einem weiten Leistungsbereich sehr genau einhalten kann. Das aus dem genannten europäischen Patent bekannte System hat den Vorteil, dass es praktisch ohne Verschleiß und Alterung von empfindlichen Sensoren auskommt.

In der europäischen Patentanmeldung EP 1 225 330 A2 wird ein weiter verbessertes gattungsgemäßes System vorgestellt, bei dem das aus der EP 0 259 382 B1 bekannte Regelschema noch durch eine Zündzeitpunktverstellung ergänzt wurde, um in jeder Situation eine Regelreserve für das schnelle Reagieren auf Laständerungen bereitzustellen. Darüber hinaus dient diese Regelung dazu, die Brennkraftmaschine immer mit optimalem Wirkungsgrad zu fahren. Weiterentwicklungen der beiden zuvor genannten Systeme werden in der EP 1 561 930 A1 und in der EP 1 561 931 A1 beschrieben. In der EP 1 561 930 A1 ist das System der EP 0 259 382 B1 dahingehend modifiziert wird, dass auf die Messung des Leistungssignals verzichtet werden kann. Dies wird erzielt, indem der Lambdawert eines in der Brennkraftmaschine zu verbrennenden Treibstoff-Luftgemischs oder ein in einer Beziehung zu diesem Lambdawert stehender Ersatzmotorparameter in Abhängigkeit der zugeführten Brennstoffmenge pro Zeiteinheit oder in Abhängigkeit der zugeführten Treibstoffenergie pro Zeiteinheit geregelt wird. In der EP 1 561 931 A1 wird das Verfahren gemäß EP 0 259 382 B1 dahingehend modifiziert, dass der Druck vor den Einlassventilen der Zylinder nicht mehr zur Verfügung stehen muss. Erzielt wird dies, indem anstelle des Drucks vor den Einlassventilen der Istwert des Lambdawertes oder des Heizwertes des Treibstoff-Luftgemischs oder des Stickoxidemissionswertes geregelt wird.

Nachteilig an den bisher bekannten Verfahren und Regeleinrichtungen ist der Umstand, dass die Regelung bestimmte Änderungen in den Randbedingungen bzw. bestimmte Änderungen im Langzeitverhalten der Brennkraftmaschine nicht ausreichend berücksichtigt.

Aufgabe der vorliegenden Erfindung ist es daher, ein gattungsgemäßes Regelverfahren, eine Regeleinrichtung sowie eine Brennkraftmaschine zur Verfügung zu stellen, bei denen diese Probleme nicht mehr auftreten.

Diese Aufgabe wird gelöst durch ein Verfahren zum Betreiben einer Brennkraftmaschine unter Zufuhr eines Treibstoff-Luftgemischs, wobei zumindest zwei verschiedene Betriebszustände vorgesehen sind, wobei im ersten Betriebszustand ein IST-Abgasemissionswert der Brennkraftmaschine gemessen wird und das Verhältnis von Treibstoff zu Luft des zugeführten Treibstoff-Luftgemischs und/oder die Treibstoffmenge in Abhängigkeit dieses Abgasemissionswertes zum Erreichen des SOLL-Abgasemissionswerts nachgeregelt wird, wobei gleichzeitig der Druck des Treibstoff-Luftgemischs vor den Einlassventilen der Brennkraftmaschine und das Leistungsäquivalent der Brennkraftmaschine ermittelt werden und aus dem IST-Abgasemissionswert und den zugehörigen Werten von Druck vor den Einlassventilen der Brennkraftmaschine und Leistungsäquivalent der Brennkraftmaschine ein Kennlinienfeld erstellt wird, wobei im zweiten Betriebszustand auf den SOLL-Abgasemissionswert geregelt wird, indem das Leistungsäquivalent der Brennkraftmaschine ermittelt wird und der Druck des Treibstoff-Luftgemischs vor den Einlassventilen der Brennkraftmaschine und das Verhältnis von Treibstoff zu Luft und/oder die Treibstoffmenge unter Rückgriff auf das Kennlinienfeld eingestellt werden.

Diese Aufgabe wird weiters gelöst durch eine Regeleinrichtung zur Durchführung dieses Verfahrens sowie eine Brennkraftmaschine, umfassend eine Vorrichtung zum Verändern der Menge und des Verhältnisses des Treibstoffi-Luftgemischs, das der Brennkraftmaschine zugeführt wird, einen Druckmesser zum Erfassen des Gemischdrucks vor den Einlassventilen der Brennkraftmaschine und eine Vorrichtung zum Erfassen des Leistungsäquivalents der Brennkraftmaschine, gekennzeichnet durch eine Regeleinrichtung zur Durchführung des Verfahrens.

Weiters wird die Aufgabe durch eine Brennkraftmaschine, umfassend eine Vorrichtung zum Verändern der Menge und des Verhältnisses des Treibstoff-Luftgemischs, das der Brennkraftmaschine zugeführt wird, einen Druckmesser zum Erfassen des Gemischdrucks vor den Einlassventilen der Brennkraftmaschine und eine Vorrichtung zum Erfassen des Leistungsäquivalents der Brennkraftmaschine, gekennzeichnet durch eine Regeleinrichtung, mit der die Brennkraftmaschine in zumindest zwei verschiedenen Betriebszuständen betreibbar ist, wobei im ersten Betriebszustand über die Messeinrichtung zum Erfassen zumindest eines Abgasemissionswertes ein IST-Abgasemissionswert der Brennkraftmaschine gemessen wird und in Abhängigkeit dieses Abgasemissionswertes das Verhältnis von Treibstoff zu Luft des Treibstoff-Luftgemischs und/oder die Treibstoffmenge zum Erreichen des SOLL-Abgasemissionswertes mit der Vorrichtung zum Verändern der Menge und des Verhältnisses des Treibstoff-Luftgemischs nachgeregelt wird, wobei gleichzeitig der Druckmesser den Druck des Treibstoff-Luftgemischs vor den Einlassventilen der Brennkraftmaschine und die Vorrichtung zum Erfassen des Leistungsäquivalents das Leistungsäquivalent der Brennkraftmaschine ermitteln und aus dem IST-Abgasemissionswert und den zugehörigen Werten von Druck vor den Einlassventilen der Brennkraftmaschine und Leistungsäquivalent der Brennkraftmaschine ein Kennlinienfeld erstellen und abspeichern, wobei im zweiten Betriebszustand auf den SOLL-Abgasemissionswert geregelt wird, indem die Vorrichtung zum Erfassen des Leistungsäquivalents das Leistungsäquivalent der Brennkraftmaschine ermittelt und der Druck des Treibstoff-Luftgemischs vor den Einlassventilen der Brennkraftmaschine und das Verhältnis von Treibstoff zu Luft und/oder die Treibstoffmenge unter Rückgriff auf das Kennlinienfeld mit der Vorrichtung zum Verändern der Menge und/oder des Verhältnisses des Treibstoff-Luftgemischs eingestellt werden, gelöst.

Während bei der EP 0 259 382 B1 im Wesentlichen ein einfacher Stellbetrieb vorgesehen ist, bei dem auf abgespeicherte Werte für ein Kennlinienfeld zurückgegriffen wird, ohne dass die tatsächlichen Emissionswerte berücksichtigt werden, wird beim erfindungsgemäßen Verfahren das Kennlinienfeld an der tatsächlich eingesetzten Brennkraftmaschine selbst erstellt, sodass die Eigenheiten und Veränderungen an der Brennkraftmaschine berücksichtigt werden können. Während im ersten Betriebszustand also eine Regelung unter Ermittlung von IST-Abgasemissionswerten erfolgt und eine Nachführung auf den SOLL-Abgasemissionswert in einem geschlossenen Regelkreis erfolgt, erfolgt im zweiten Betriebszustand die Regelung ohne Rückgriff auf ermittelte IST-Abgasemissionswerte. Im zweiten Betriebszustand kann also auf die Ermittlung des IST-Abgasemissionswertes verzichtet werden.

Allerdings ist in einer bevorzugten Variante zeitweise ein dritter Betriebszustand vorgesehen, bei dem auf den SOLL-Abgasemissionswert geregelt wird, indem das Leistungsäquivalent der Brennkraftmaschine ermittelt wird und der Druck des Treibstoff-Luftgemischs vor den Einlassventilen der Brennkraftmaschine und das Verhältnis von Treibstoff zu Luft unter Rückgriff auf das Kennlinienfeld eingestellt werden, wobei eine zusätzliche Abgasemissionsmessung zur Kontrolle des Kennlinienfeldes vorgesehen ist. In diesem Betriebszustand können die Funktionsweise der Brennkraftmaschine und das Kennlinienfeld kontrolliert werden. Bei Abweichen des IST-Abgasemissionswertes vom SOLL-Abgasemissionswertes um einen, vorzugsweise vorgegebenen, Betrag kann eine Umstellung des Betriebszustandes vorgesehen sein und auf eine Regelung in Abhängigkeit des Abgasemissionswertes umgestellt werden.

Weiters ist günstig, dass bei Kontrolle des Kennlinienfeldes und bei Abweichen der ist-Werte vom jeweiligen Soll-Wert um einen vorgebbaren Betrag das Kennlinienfeld im zweiten Betriebszustand angepasst wird. Indem durch regelmäßige Kontrolle der Abgasemissionswerte und regelmäßige Adaptierung des Kennlinienfeldes die Regelung optimiert wird, kann auf laufende Änderungen in Betrieb durch geänderte Bedingungen (beispielsweise Ablagerungen im Brennraum bzw. mechanische Veränderungen an der Brennkraftmaschine) sowie Änderungen in den Umgebungsbedingungen eine Anpassung vorgenommen werden. Eine Adaptierung des Kennlinienfeldes erfolgt meist dann, wenn die IST-Werte von den SOLL-Werten des Kennlinienfeldes um zumindest 1%, vorzugsweise von bis zu 10%, absolut abweichen.

Das Abwechseln zwischen den beiden Betriebszuständen ist deshalb vorteilhaft, da im ersten Betriebszustand die Brennkraftmaschine optimiert wird, was mit dem Nachteil einhergeht, dass ständig die Abgasemissionswerte ermittelt werden müssen. Abgasemissionswerte wie z.B. die $NO_x$-Konzentration können allerdings nur durch kostenintensive, empfindliche Sensoren ermittelt werden, die einem erhöhten Verschleiß unterliegen. Daher ist beim zweite Betriebszustand günstigerweise vorgesehen, dass die Abgasemissionssensoren deaktiviert sind, was zu einer Schonung und damit höheren Lebensdauer führt.

Im bevorzugten Fall ist vorgesehen, dass als Abgasemissionswert die $NO_x$-Menge, vorzugsweise die $NO_x$-Konzentration im Abgas ermittelt wird. Für die entsprechende Brennkraftmaschine bedeutet dies, dass eine $NO_x$-Messeinrichtung vorgesehen ist. Beispielsweise kann dies ein $NO_x$-Sensor nach an sich bekanntem Stand der Technik sein.

In einer günstigen Ausführungsvariante ist vorgesehen, dass im ersten Betriebszustand zusätzlich gleichzeitig die Drehzahl der Brennkraftmaschine ermittelt wird und das Kennlinienfeld um den zugehörigen Drehzahlwert erweitert wird, wobei im zweiten Betriebszustand auf den SOLL-Abgasemissionswert geregelt wird, indem zusätzlich die Drehzahl der Brennkraftmaschine ermittelt wird. Zur Ermittlung der Drehzahl der Brennkraftmaschine kann eine Drehzahl-Messeinrichtung vorgesehen sein.

Weiters kann vorgesehen sein, dass im ersten Betriebszustand zusätzlich gleichzeitig die Temperatur des Treibstoff-Luftgemischs vor den Einlassventilen der Brennkraftmaschine ermittelt wird und das Kennlinienfeld um den zugehörigen Temperaturwert erweitert wird, wobei im zweiten Betriebszustand auf den SOLL-Abgasemissionswert geregelt wird, indem zusätzlich die Temperatur des Treibstoff-Luftgemischs vor den Einlassventilen ermittelt wird. Für die Temperatur des Treibstoff-Luftgemischs kann eine Temperatur-Messeinrichtung wie beispielsweise ein Thermometer vorgesehen sein.

Bevorzugt ist weiters vorgesehen, dass im ersten Betriebszustand gleichzeitig zusätzlich der Zündzeitpunkt bestimmt wird und das Kennlinienfeld um den zugehörigen Wert des Zündzeitpunkts erweitert wird, wobei im zweiten Betriebszustand auf den SOLL-Abgasemissionswert geregelt wird, indem der Zündzeitpunkt der Brennkraftmaschine ermittelt wird.

Weiters kann vorgesehen sein, dass im ersten Betriebszustand zusätzlich der Heizwert des Treibstoffs ermittelt wird und das Kennlinienfeld um den zugehörigen Heizwert erweitert wird, wobei im zweiten Betriebszustand auf den SOLL-Abgasemissionswert geregelt wird, indem zusätzlich der Heizwert des Treibstoffs ermittelt wird. Da die Ermittlung des Heizwertes eines Treibstoffs regelmäßig sehr aufwendig ist, kann diese beispielsweise aus der Verbrennungstemperatur bestimmt werden.

Schließlich kann zusätzlich vorgesehen sein, dass im ersten Betriebszustand die Luftfeuchtigkeit der zugeführten Luft ermittelt wird und das Kennlinienfeld um den zugehörigen Wert von Luftfeuchtigkeit erweitert wird, wobei im zweiten Betriebszustand auf den SOLL-Abgasemissionswert geregelt wird, indem zusätzlich die Luftfeuchtigkeit der der Brennkraftmaschine zugeführten Luft ermittelt wird.

Die Luftfeuchtigkeit der zugeführten Luft kann durch an sich bekannte Feuchtigkeitssensoren ermittelt werden. Günstigerweise wird dabei wie an sich bekannt die Gesamtmenge an Wasser pro Volumen (z.B. Gramm Wasser pro Kubikmeter Luft; absolute Feuchtigkeit) ermittelt.

Im bevorzugten Fall handelt es sich bei der Brennkraftmaschine um eine sogenannte gemischaufgeladene Brennkraftmaschine, d.h. um eine Brennkraftmaschine, bei der ein Treibstoff-Luftgemisch mittels einer Verdichtungseinrichtung verdichtet bzw. auf höheren Druck gebracht wird, bevor das Treibstoff-Luftgemisch dem Brennraum der Brennkraftmaschine zugeführt wird. Weiters ist bevorzugt vorgesehen, dass die Brennkraftmaschine eine fremdgezündete Brennkraftmaschine, d.h., beispielsweise ein Ottomotor ist. Schließlich ist günstigerweise vorgesehen, dass die Brennkraftmaschine ein Gasmotor ist, d.h. eine Brennkraftmaschine, die mit gasförmigem Treibstoff wie Methan oder Deponiegas betrieben wird.

Besonders bevorzugt handelt es sich bei der Brennkraftmaschine um eine Brennkraftmaschine mit magerer Betriebsweise. Das bedeutet, dass der Lambdawert größer 1 ist. Unter dem Lambdawert wird, wie allgemein bekannt, das Verhältnis von Luft zu Treibstoff ($\lambda$) bei Verbrennungsvorgängen bezeichnet, wobei $\lambda = 1$ einer stöchiometrischen Verbrennung entspricht. Bei $\lambda$-Werten > 1 spricht man von einem mageren Gemisch, während man bei $\lambda$-Werten < 1 von einem fetten Gemisch spricht.

In einem weiteren Aspekt betrifft die Erfindung eine stationäre Kraftanlage, umfassend eine Brennkraftmaschine und einen Generator.

Weitere Vorteile und Details der Erfindung werden anhand der folgenden Figuren und Figurenbeschreibungen erläutert.

Es zeigt die

Fig.1 1 eine schematische Darstellung der Erfindung anhand einer Brennkraftmaschine,
Fig. 2 eine vereinfachte Darstellung eines Kennlinienfeldes für die Regelung im zweiten Betriebszustand und die
Fig. 3 eine schematische Darstellung des Regelschemas.

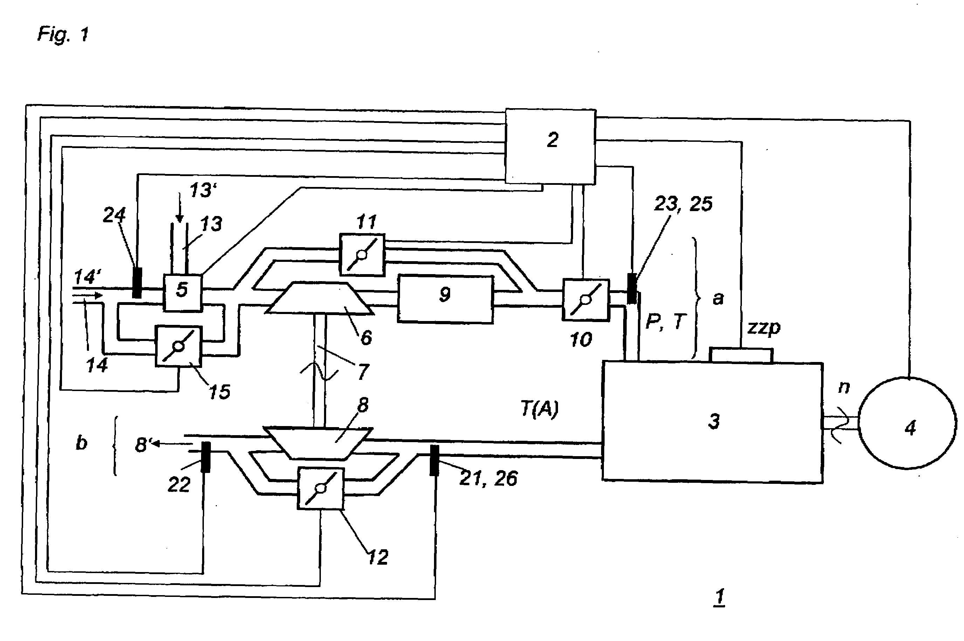

In der Fig. 1 ist eine schematische Darstellung einer erfindungsgemäßen Brennkraftmaschine zur Durchführung des erfindungsgemäßen Verfahrens gezeigt. Die Brennkraftmaschine 1 umfasst den eigentlichen Verbrennungsmotor 3 mit einem Einlasstrakt a und einem Auslasstrakt b. Im Einlasstrakt a sind eine Luftzufuhr 14 sowie eine Treibstoffzufuhr 13, über die Luft 14' bzw. ein Treibstoff 13' bevorzugt als Gas wie z.B. Methan zugeführt werden, angeordnet. Diese münden in einen Gasmischer 5, in dem das Treibstoff-Luftgemisch bereitgestellt wird. Das Gemisch wird zu einer Verdichtungseinrichtung 6, wo das Treibstoff-Luftgemisch verdichtet wird, gleitet. Anschließend wird das verdichtete Gemisch in einem Kühler 9 abgekühlt. Eine Drosseleinrichtung 10 beispielsweise in der Form einer Drosselklappe reguliert die Menge an Treibstoff-Luftgemisch, die in den Motor gespeist wird. Über eine Umblaseleitung und ein Umblaseventil 11 kann die Menge an zugeführtem Treibstoff-Luftgemisch ebenfalls reguliert werden. Außerdem kann noch ein Bypassventil 15 vorgesehen sein, um die Menge an Treibstoff-Luftgemisch zu regeln. Im Abgastrakt b ist eine Abgasturbine 8 angeordnet, die vom Abgas 8' der Brennkraftmaschine 1 angetrieben wird und die über eine Welle 7 die Verdichtungseinrichtung 6 antreibt. Über einen Bypass 12 kann die Menge an Abgas 8', die der Abgasturbine 8 zugeführt wird, reguliert werden. Der Verbrennungsmotor 3 treibt einen Generator 4 an, mit dem elektrischer Strom erzeugt wird. Dieser kann im Inselbetrieb als einzige Stromquelle dienen oder im Netzparallelbetrieb dazu dienen, Strom in ein bestehendes Stromnetz einzuspeisen. Neben einem Generator 4 kann der Verbrennungsmotor 3 allerdings auch als mechanischer Antrieb für andere Vorrichtungen verwendet werden. Brennkraftmaschine 1 und Generator 4 bilden eine stationäre Kraftanlage.

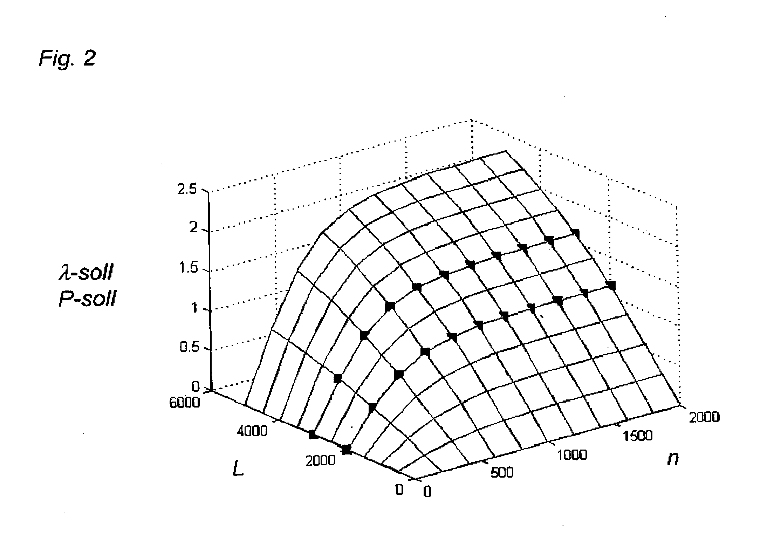

Die eigentliche Regeleinrichtung 2 zur Durchführung des Verfahrens wird im Folgenden genauer beschrieben. Im ersten Betriebszustand wird mittels Abgassensoren 21, 22 ein Abgasemissionswert der Brennkraftmaschine ermittelt. Im vorliegenden Fall sind die Sensoren 21, 22 $NO_x$-Sensoren zur Ermittlung des $NO_x$-Gehaltes im Abgas. Der Sensor 21, 22 kann einerseits vor der Abgasturbine 8 oder nach der Abgasturbine 8 angeordnet sein. Im vorliegenden Beispiel sind zwei Abgassensoren 21, 22 vorgesehen, die zwei Funktionen übernehmen können. Einerseits kann bei Ausfall eines Sensors 21, 22 der verbleibende Sensor 21, 22 die Messfunktion übernehmen. Außerdem kann durch zwei Messsensoren 21, 22 eine gegenseitige Überprüfung der Messwerte vorgenommen werden, um einen beginnenden Ausfall eines Sensors 21, 22 anzeigen zu können. Die Sensoren 21, 22 sind mit der Regeleinrichtung 2 verbunden und verarbeiten die gemessenen Abgasemissionswerte in Abhängigkeit vom Ladedruck P, der vor den Einlassventilen der Brennkraftmaschine mit dem Druckmesser 23 ermittelt wird. Auch der Druckmesser 23 steht in Verbindung mit der Regeleinrichtung 2. Zusätzlich wird das Mischungsverhältnis λ von Treibstoff zu Luft, das im Gasmischer 5 einstellbar ist, als Regelungssignal verwendet. Am Motor 3 erfolgt nun eine Ermittlung des Leistungsäquivalents der Brennkraftmaschine 1. Beispielsweise kann dies durch Ermittlung der elektrischen Leistung am Generator 4 erfolgen. Im gezeigten Ausführungsbeispiel wird zusätzlich noch die Drehzahl n des Verbrennungsmotors 3 bestimmt. Aus den so ermittelten Daten kann nun eine erste Arbeitsfläche ermittelt werden, die beispielhaft in Fig. 2 gezeigt ist. Es handelt sich dabei um eine Arbeitsfläche, in der das Leistungsäquivalent L die Motordrehzahl n und der kombinierte Soll-Ladedruck P-Soll mit dem Treibstoff-/Luftgemischverhältnis λ-Soll in einem Diagramm aufgetragen sind. Aus den einzelnen Daten wird eine Fläche bzw. ein Kennlinienfeld ermittelt. Da die Ermittlung der Arbeitsfläche nur punktweise erfolgt, d.h. dass nur bestimmte Daten und nicht die gesamte Fläche experimentell bestimmt werden, wird zwischen den Datenpunkten interpoliert (z.B. linear) wie an sich für die Erstellung von Kennlinienfeldern bekannt. Aus dem Kennlinienfeld können bei Kenntnis eines beliebigen Betriebsparameters die anderen Größen ermittelt werden. Als weitere Parameter zur Regelung kommen z.B. noch die Gemischtemperatur T (die mit dem Sensor 25 ermittelt wird), der Zündzeitpunkt ZZP etc. in Frage. Das Kennlinienfeld wird entsprechend mehrdimensional.

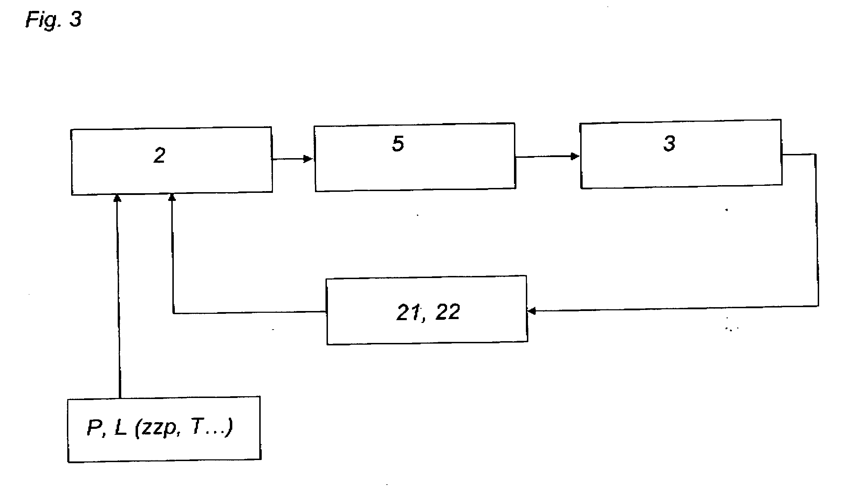

In der Fig. 3 ist eine mögliche Regeleinrichtung 2 gemäß der Erfindung näher erläutert. Der geschlossene Regelkreis umfasst den eigentlichen Regler 2, der als Eingangssignal einen Abgasemissionswert über die Abgasemissionssensoren 21, 22 erfasst. Beispielsweise wird die $NO_x$ Konzentration erfasst und an die Regeleinrichtung 2 weitergegeben. In der Regeleinrichtung 2 wird nun auf das Kennlinienfeld zurückgegriffen und der $NO_x$-Istwert mit dem $NO_x$-Sollwert verglichen. Bei einem Abweichen des $NO_x$-Istwerts vom $NO_x$-Sollwert wird als Stellglied beispielsweise ein Eingriff am Gasmischer 5 vorgenommen, um das λ -ist an ein λ - Soll (λ entspricht dem Verhältnis Treibstoff zu Luft) anzupassen. Das Veränderte λ wirkt auf die Regelstrecke und zwar dem Verbrennungsmotors 3 ein. Die neuen Abgasemissionswerte werden von den Abgasemissionssensoren 21, 22 erfasst und erneut der Regeleinrichtung 2 zugeführt. Im geschlossenen Regelkreis erfolgt so die Bestimmung des Kennlinienfelds, beispielsweise auch mit den übrigen Parametern. Im Betriebszustand 2 wird nun auf andere Betriebsparameter zurückgegriffen, und zwar insbesondere auf das Leistungsäquivalent und den Ladedruck, um die Regelung vorzunehmen. Die Abgasemissionssensoren 21, 22 sind dabei deaktiviert.

Ein Grundgedanke der Erfindung besteht in der Verwendung eines Sensors, der die Abgasemissionen misst und die Brennkraftmaschine 1 entsprechend nachjustiert. Der Abgasemissionssensor 21, 22 (idealerweise ein $NO_x$- bzw. $NO/NO_2$- oder Abgaslambda-Sensor) befindet sich an geeigneter Stelle im Abgasstrom im Abgastrakt b (beispielsweise im Abgasrohrsammler oder nach der Abgasturbine 8). Der Sensor 21, 22 kann auch doppelt ausgeführt sein, um im Fehlerfall eine erste Rückfalllösung parat zu haben. Anhand der Messdaten ($NO_x$) wird die Gemischkonzentration (Gasmischerposition bzw. Gasdosierventil) z.B. durch einen langsamen PI-Regler angepasst.

Das Kennlinienfeld bzw. die Menge der Arbeitspunkte kann verstanden werden als eine Fläche im n-dimensionalen Raum, beispielsweise als R = Funktion (Leistungsäquivalent L, Drehzahl n; Parameter Gemischtemperatur T, Ladedruck P). Als weitere Parameter dieser ‚Arbeitsfläche' sind denkbar: Zündzeitpunkt ZZP, Gasqualität (z.B. Heizwert Q), Ansaugluftfeuchte H etc. Somit erhält man bei genügend langem Motorbetrieb eine definierte 'Arbeitsfläche' für die notwendigen Emissionen. Der aktuelle Arbeitspunkt wird durch Anpassung des Gemischlambdas angefahren. Vorteile sind:

- Bei Ausfall des $NO_x$-Sensors 21, 22 kann der Verbrennungsmotor 3 anhand der Arbeitspunktflächen betrieben werden
- Sind die Arbeitsflächen des Verbrennungsmotors 3 bestimmt, kann der $NO_x$-Sensor 21, 22 in den Standbybetrieb gebracht und dessen Lebensdauer erhöht werden.
- Es entsteht die Möglichkeit anhand der Messpunkte ein $NO_x$-Modell des Verbrennungsmotors 3 zu generieren (online/offline).

Es ergeben sich mehrere mögliche Zustände der Emissionsregelung: Zunächst erfolgt eine Motoreinlemphase (im ersten Betriebszustand). Die Motorerstinbetriebnahme kann beim Hersteller oder beim Kunden vorgenommen werden. Wenn der Motor im "dual mode" Betriebszustand betrieben wird, werden die Abgaswerte vom beispielsweise $NO_x$-Sensor gemessen und als Regelgröße verwendet. Im ersten Betriebszustand erfolgt die Generierung der Arbeitsflächen (z.B. Generierung des $NO_x$-Modells). Im zweiten Betriebszustand der Emissionsregelung oder im Falle eines Sensorsausfalls wird auf die eingelernten Arbeitsflächen zurückgegriffen.

Während des Motorbetriebs werden mit aktivem $NO_x$-Sensor 21, 22 an stationären Arbeitspunkten Messgrößen (Leistung L bzw. Leistungsäquivalent, D, T, n, ZZP, T(A), evt. Gasqualitätsinformation Q, Feuchte H etc.) in einem Datenfeld abgelegt. (Unter Leistungsäquivalent kann sowohl die elektrische Leistung, die Torsionsleistung, Abtriebsleistung, als auch die Gasmenge verstanden werden.) Ein solches Datenfeld könnte beispielsweise folgendermaßen aussehen:

| Laufende Nummer | L | n | D | T | ZZP | T(Abgas) | Q |
|---|---|---|---|---|---|---|---|
| 1 | 100 | 1500 | 1200 | 40 | 20 | 500 | 9 |
| 2 | 200 | 1500 | 1600 | 41 | 20 | 520 | 9 |
| 3 | 200 | 1800 | 1550 | 40 | 20 | 530 | 9 |
| 4 | 400 | 1500 | 2000 | 41 | 25 | 600 | 8.5 |
| ... | ... | ... | ... | ... | ... | ... | ... |
| (es handelt sich um ein fiktives Modell) | | | | | | | |

Das Datenfeld kann nach bestimmten Größen geordnet werden (beispielsweise Leistungsäquivalent, Drehzahl, etc.). Durch das Datenfeld ergeben sich für die Regelung ohne $NO_x$-Sensor folgende Ansätze:

a) In diesem Datenfeld werden die nächstliegenden Punkte ermittelt. Es wird durch herkömmliche Interpolationsmethoden zwischen den Punkten im Datenfeld der benötigte Ladedruck P bzw. die notwendige Gemischkonzentration $\lambda$ berechnet. Sonstige Parameter wie Zündzeitpunkt, Gasqualität, Ansauglufttemperatur, -feuchte H werden durch weitere Flächen für die Interpolationsmethoden beachtet.

b) Anhand des Datenfeldes kann ein vereinfachtes $NO_x$-Modell online/offline generiert werden. Es ist bekannt, dass die $NO_x$-Bildung abhängig von der Verweilzeit im Zylinder (indirekt proportional zur Drehzahl n des Motors) und der mittleren Gastemperatur im Brennraum ist. Da die Gastemperatur nicht messbar ist wird die Abgastemperatur T(A) indirekt als Ersatzgröße verwendet. Für die Berechnung werden weiters, sofern verfügbar, die Parameter Leistungsäquivalent, Gemischtemperatur, Zündzeitpunkt, Gasqualität, Ansauglufttemperatur und Feuchte H berücksichtigt. Somit ergibt sich folgender Funktionsansatz für die Stickoxidbildung:

$$NO_x\text{-Menge} = F\ (L,\ P,\ n,\ T,\ T(A),\ ZZP,\ H,\ Q,\ \lambda)$$

Im Funktionsansatz kann die Gemischkonzentration $\lambda$ sowohl als Gasmischerposition, als auch Gemischlambda angesetzt werden. Für die Einhaltung der $NO_x$-Emissionen kann nun durch Anpassung von P bzw. Gasmischerposition oder Gemischlambda auf den gewünschten Sollwert gestellt werden.

Das neue Verfahren ermöglicht die Berücksichtigung von Randbedingungen (Zündzeitpunkt ZZP, Umgebungsluftfeuchte H) und Änderungen im Langzeitverhalten (Ablagerungen im Brennraum mit Drift der Emissionswerte) zu erkennen. Eine direkte Notwendigkeit der Leistungsmessung kann durch Ermitteln eines Leistungsäquivalents ungenau werden. Man kann niedrige Emissionsgrenzwerte (niedrigere Grenzwerte) einhalten und dadurch erhöhten Anforderungen an die Genauigkeit Rechnung tragen. Es ergibt sich die einfache Möglichkeit, veränderliche Randbedingungen, Drifterscheinungen auszuregeln und dadurch die erforderte Genauigkeit zu erreichen. Weiters entfällt die Notwendigkeit der direkten Leistungsmessung.

Der Sensor 21, 22 kann auch als temporäres Hilfsmittel zur Erzeugung der Arbeitsflächen verstanden werden. Nach Ende der Lebensdauer des Sensors 21, 22 könnte der Verbrennungsmotor 3 ohne Sensor 21, 22 mithilfe der Arbeitsflächen betrieben werden.

**Patentansprüche**

1.  Verfahren zum Betreiben einer Brennkraftmaschine (1) unter Zufuhr eines Treibstoff-Luftgemischs, wobei zumindest zwei verschiedene Betriebszustände vorgesehen sind, wobei im ersten Betriebszustand ein IST-Abgasemissionswert der Brennkraftmaschine (1) gemessen wird und das Verhältnis ($\lambda$) von Treibstoff zu Luft des zugeführten Treibstoff-Luftgemischs und/oder die Treibstoffmenge in Abhängigkeit dieses Abgasemissionswertes zum Erreichen des SOLL-Abgasemissionswerts nachgeregelt wird, wobei gleichzeitig der Druck (P) des Treibstoff-Luftgemischs vor den Einlassventilen der Brennkraftmaschine (1) und das Leistungsäquivalent (L) der Brennkraftmaschine (1) ermittelt werden und aus dem IST-Abgasemissionswert und den zugehörigen Werten von Druck (P) vor den Einlassventilen der Brennkraftmaschine und Leistungsäquivalent (L) der Brennkraftmaschine (1) ein Kennlinienfeld erstellt wird, wobei im zweiten Betriebszustand auf den SOLL-Abgasemissionswert geregelt wird, indem das Leistungsäquivalent (L) der Brennkraftmaschine ermittelt wird und der Druck (P) des Treibstoff-Luftgemischs vor den Einlassventilen der Brennkraftmaschine (1) und das Verhältnis ($\lambda$) von Treibstoff zu Luft und/oder die Treibstoffmenge unter Rückgriff auf das Kennlinienfeld eingestellt werden.

2. Verfahren nach Anspruch 1, **dadurch gekennzeichnet, dass** der SOLL-Abgasemissionswert die $NO_x$-Konzentration im Abgas ist.

3. Verfahren nach Anspruch 1 oder Anspruch 2, **dadurch gekennzeichnet, dass** im ersten Betriebszustand zusätzlich gleichzeitig die Drehzahl (11) der Brennkraftmaschine (1) ermittelt wird und das Kennlinienfeld um den zugehörigen Drehzahlwert (11) erweitert wird, wobei im zweiten Betriebszustand auf den SOLL-Abgasemissionswert geregelt wird, indem zusätzlich die Drehzahl (11) der Brennkraftmaschine (1) ermittelt wird.

4. Verfahren nach einem der Ansprüche 1 bis 3, **dadurch gekennzeichnet, dass** im ersten Betriebszustand zusätzlich gleichzeitig die Temperatur (T) des Treibstoff-Luftgemischs vor den Einlassventilen der Brennkraftmaschine (1) ermittelt wird und das Kennlinienfeld um den zugehörigen Temperaturwert erweitert wird, wobei im zweiten Betriebszustand auf den SOLL-Abgasemissionswert geregelt wird, indem zusätzlich die Temperatur (T) des Treibstoff-Luftgemischs vor den Einlassventilen ermittelt wird.

5. Verfahren nach einem der Ansprüche 1 bis 4, **dadurch gekennzeichnet, dass** im ersten Betriebszustand gleichzeitig zusätzlich der Zündzeitpunkt (ZZP) bestimmt wird und das Kennlinienfeld um den zugehörigen Wert des Zündzeitpunkts (ZZP) erweitert wird, wobei im zweiten Betriebszustand auf den SOLL-Abgasemissionswert geregelt wird, indem der Zündzeitpunkt (ZZP) der Brennkraftmaschine ermittelt wird.

6. Verfahren nach einem der Ansprüche 1 bis 5, **dadurch gekennzeichnet, dass** im ersten Betriebszustand zusätzlich der Heizwert (Q) des Treibstoffs ermittelt wird und das Kennlinienfeld um den zugehörigen Heizwert (Q) erweitert wird, wobei im zweiten Betriebszustand auf den SOLL-Abgasemissionswert geregelt wird, indem zusätzlich der Heizwert (Q) des Treibstoffs ermittelt wird.

7. Verfahren nach einem der Ansprüche 1 bis 6, **dadurch gekennzeichnet, dass** im ersten Betriebszustand die Luftfeuchtigkeit (H) der zugeführten Luft ermittelt wird und das Kennlinienfeld um den zugehörigen Wert von Luftfeuchtigkeit (H) erweitert wird, wobei im zweiten Betriebszustand auf den SOLL-Abgasemissionswert geregelt wird, indem zusätzlich die Luftfeuchtigkeit (H) der der Brennkraftmaschine zugeführten Luft ermittelt wird.

8. Verfahren nach einem der Ansprüche 1 bis 7, **dadurch gekennzeichnet, dass** die zumindest zwei Betriebszustände einander abwechseln.

9. Verfahren nach einem der Ansprüche 1 bis 8, **dadurch gekennzeichnet, dass** zeitweise ein dritter Betriebszustand vorgesehen ist, bei dem auf den SOLL-Abgasemissionswert geregelt wird, indem das Leistungsäquivalent (L) der Brennkraftmaschine (1) ermittelt wird und der Druck (P) des Treibstoff-Luftgemischs vor den Einlassventilen der Brennkraftmaschine und das Verhältnis ($\lambda$) von Treibstoff zu Luft unter Rückgriff auf das Kennlinienfeld eingestellt werden, wobei eine zusätzliche Abgasemissionsmessung zur Kontrolle des Kennlinienfeldes vorgesehen ist.

10. Verfahren nach Anspruch 9, **dadurch gekennzeichnet, dass** das Kennlinienfeld kontrolliert wird und dass bei Abweichen der Ist-Werte vom jeweiligen Soll-Wert um einen vorgebbaren Betrag das Kennlinienfeld, vorzugsweise im zweiten Betriebszustand, angepasst wird.

11. Regeleinrichtung (2) zur Durchführung eines Verfahrens nach einem der Ansprüche 1 bis 10.

12. Brennkraftmaschine (1), umfassend eine Vorrichtung (5, 10, 11, 15) zum Verändern der Menge und/oder des Verhältnisses des Treibstoff-Luftgemischs, das der Brennkraftmaschine (1) zugeführt wird, einen Druckmesser (23) zum Erfassen des Gemischdrucks (P) vor den Einlassventilen der Brennkraftmaschine, eine Vorrichtung (4) zum Erfassen des Leistungsäquivalents (L) der Brennkraftmaschine (1), **gekennzeichnet durch** eine Regeleinrichtung (2), mit der die Brennkraftmaschine (1) in zumindest zwei verschiedenen Betriebszuständen betreibbar ist, wobei im ersten Betriebszustand über eine Messeinrichtung (21, 22) zum Erfassen zumindest eines Abgasemissionswertes ein IST-Abgasemissionswert der Brennkraftmaschine (1) gemessen wird und in Abhängigkeit dieses Abgasemissionswertes das Verhältnis ($\lambda$) von Treibstoff zu Luft des Treibstoff-Luftgemischs und/oder die Treibstoffmenge zum Erreichen des SOLL-Abgasemissionswertes mit der Vorrichtung (5, 10, 11, 15) zum Verändern der Menge und/oder des Verhältnisses (A) des Treibstoff-Luftgemischs nachgeregelt wird, wobei gleichzeitig der Druckmesser (23) den Druck (P) des Treibstoff-Luftgemischs vor den Einlassventilen der Brennkraftmaschine (1) und die Vorrichtung (4) zum Erfassen des Leistungsäquivalents (L) das Leistungsäquivalent (L) der Brennkraftmaschine (1) ermitteln und aus dem IST-Abgasemissionswert und den zugehörigen Werten von Druck (P) vor den Einlassventilen der Brennkraftmaschine (1) und Leistungsäquivalent (L) der Brennkraftmaschine (1) ein Kennlinienfeld erstellen und abspeichern, wobei im zweiten Betriebszustand auf den SOLL-Abgasemissionswert geregelt wird, indem die Vorrichtung (4) zum Erfassen des Leistungsäquivalents (L) das Leistungsäquivalent (L) der , Brennkraftmaschine (1) ermittelt und der Druck (P) des Treibstoff-Luftgemischs vor den Einlassventilen der Brennkraftmaschine und das Verhältnis ($\lambda$) von Treibstoff zu Luft und/oder die Treibstoffmenge unter Rückgriff auf das Kennlinienfeld mit der Vorrichtung (5, 10, 11, 15) zum Verändern der Menge und/oder des Verhältnisses ($\lambda$) des Treibstoff-Luftgemischs eingestellt werden.

13. Brennkraftmaschine nach Anspruch 12, **gekennzeichnet durch** einen dritten Betriebszustand, bei dem auf den SOLL-Abgasemissiongwert geregelt wird, indem das Leistungsäquivalent (L) der Brennkraftmaschine (1) ermittelt wird und der Druck (P) des Treibstoff-Luftgemischs vor den Einlassventilen der Brennkraftmaschine (1) und das Verhältnis ($\lambda$) von Treibstoff zu Luft unter Rückgriff auf das Kennlinienfeld eingestellt werden, wobei zusätzlich eine IST-Abgasemissionswertmessung zur Kontrolle des Kennlinienfeldes vorgesehen ist.

14. Brennkraftmaschine nach Anspruch 12 oder Anspruch 13, umfassend zusätzlich wenigstens eine Vorrichtung ausgewählt aus der Gruppe Drehzahlmesser für die Brennkraftmaschine, Temperaturmesseinrichtung (24) für das Treibstoff-Luftgemisch, Zündzeitpunkt-Messvorrichtung, Vorrichtung zum Ermitteln des Heizwerts des Treibstoffs-, Luftfeuchtigkeitssensors.

15. Brennkraftmaschine umfassend eine Regeleinrichtung nach Anspruch 11.

16. Stationäre Kraftanlage, umfassend eine Brennkraftmaschine (1) nach einem der Ansprüche 12 bis 15 und einen Generator (4).

Fig. 1

EP 2 199 580 A1

*Fig. 2*

λ-soll
P-soll

Fig. 3

Europäisches
Patentamt

European
Patent Office

Office européen
des brevets

## EUROPÄISCHER TEILRECHERCHENBERICHT

der nach Regel 63 des Europäischen Patentübereinkommens für das weitere Verfahren als
europäischer Recherchenbericht gilt

**Nummer der Anmeldung**

EP 08 02 1784

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| D,X | EP 1 225 330 A (JENBACHER AG [AT]) 24. Juli 2002 (2002-07-24) * das ganze Dokument * | 1-16 | INV. F02D41/14 F02D41/24 F02D33/02 F02D19/02 |
| X | EP 1 602 813 A (GE JENBACHER GMBH & CO OHG [AT]) 7. Dezember 2005 (2005-12-07) * das ganze Dokument * | 1-16 | |
| X | WO 87/05360 A (JENBACHER WERKE AG [AT]) 11. September 1987 (1987-09-11) * das ganze Dokument * | 1-16 | |
| D,X | EP 1 561 931 A (GE JENBACHER GMBH & CO OHG [AT]) 10. August 2005 (2005-08-10) * das ganze Dokument * | 1-16 | |
| X | EP 1 387 073 A (CATERPILLAR INC [US]) 4. Februar 2004 (2004-02-04) * das ganze Dokument * | 1-16 | |
| X | WO 01/59285 A (WESTPORT RES INC [CA]; CUMMINS INC [US]; ANCIMER RICHARD [CA]; MUNSHI) 16. August 2001 (2001-08-16) * das ganze Dokument * | 1-16 | RECHERCHIERTE SACHGEBIETE (IPC) F02D |
| | -/-- | | |

### UNVOLLSTÄNDIGE RECHERCHE

Die Recherchenabteilung ist der Auffassung, daß ein oder mehrere Ansprüche, den Vorschriften des EPÜ in einem solchen Umfang nicht entspricht bzw. entsprechen, daß sinnvolle Ermittlungen über den Stand der Technik für diese Ansprüche nicht, bzw. nur teilweise, möglich sind.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| München | 17. Juni 2009 | Aign, Torsten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..............................................................................

& : Mitglied der gleichen Patentfamilie, übereinstimmendes Dokument

EPO FORM 1503 03.82 (P04E09)

**EP 2 199 580 A1**

Europäisches
Patentamt

European
Patent Office

Office européen
des brevets

## EUROPÄISCHER
## TEILRECHERCHENBERICHT

**Nummer der Anmeldung**

EP 08 02 1784

| | EINSCHLÄGIGE DOKUMENTE | | KLASSIFIKATION DER ANMELDUNG (IPC) |
|---|---|---|---|
| Kategorie | Kennzeichnung des Dokuments mit Angabe, soweit erforderlich der maßgeblichen Teile | Betrifft Anspruch | |
| X | DE 102 13 341 A1 (DEUTZ AG [DE]) 9. Oktober 2003 (2003-10-09) * das ganze Dokument * ----- | 1-16 | |
| | | | **RECHERCHIERTE SACHGEBIETE (IPC)** |

EPO FORM 1503 03.82 (P04C12)

13

Europäisches
Patentamt

European
Patent Office

Office européen
des brevets

**UNVOLLSTÄNDIGE RECHERCHE
ERGÄNZUNGSBLATT C**

Nummer der Anmeldung

EP 08 02 1784

Unvollständig recherchierte Ansprüche:
    1-16

Nicht recherchierte Ansprüche:
    -

Grund für die Beschränkung der Recherche:

Der Gegenstand von Anspruch 1 erfüllt nicht die Erfordernisse des
Artikels 84 EPÜ, weil er nicht klar definiert ist. Der erste Teil des
Anspruchs beschreibt einen ersten Betriebszustand einer
Brennkraftmaschine. Demnach soll eine Treibstoff- / Luft-Regelung eines
Abgasemissionswerts auf einen Sollwert erfolgen. Dabei werden ein Druck
und ein Leistungswert erfasst und daraus ein Kennlinienfeld erstellt. Im
zweiten Betriebszustand soll nun wieder eine Regelung des
Abgasemissionswerts auf einen Sollwert erfolgen, allerdings unter
Rückgriff auf das Kennfeld. Es ergeben sich diverse Klarheitsprobleme:

- Es kann nicht erkannt werden, wo in der Beschreibung gestützt wird,
dass ein "IST-Abgasemissionswert" Eingang in das zu erstellende
Kennlinienfeld findet. Die Bedeutung diese Merkmals scheint zweifelhaft
auch mit Rücksicht darauf, dass im Zusammenhang mit dem zweiten
Betriebszustand kein Bezug zu diesem Kennfeld-Parameter hergestellt wird.
- Eine Regelung scheint im Gegensatz zum Anspruchswortlaut gemäß den
Ausführungen in der Beschreibung im zweiten Betriebszustand nicht
durchgeführt zu werden. Vielmehr scheint eine kennfeldbasierte Steuerung
angestrebt zu sein, die zum Erreichen des gewünschten Abgasemissionswerts
hinreichend sein soll.
- Der Anspruch gibt keinerlei Aufschluss darüber, wie die Treibstoff- /
Luft-Einstellung auf dem definierten Kennlinienfeld basieren sollte. Es
wird lediglich ein Zusammenhang zwischen dem nicht näher definierten
"Leistungsäquivalent" und dem "Druck des Treibstoff-Luftgemischs"
hergestellt. Der Anspruch bedingt letztlich nur einen irgendwie gearteten
Rückgriff auf das Kennlinienfeld. Weitere Unterschiede zum ersten
Betriebszustand sind nicht manifestiert.

Wie nun in welchem Betriebszustand geregelt oder gesteuert werden soll,
müsste aus der Beschreibung in eindeutiger Weise, und im Einklang mit dem
Anspruchsgegenstand hervorgehen. In der Beschreibung wird ein
geschlossener Regelkreis ab Seite 9, Zeile 31 beschrieben. Anspruch 2
entsprechend kann verstanden werden, dass der NOx-Wert dem beanspruchten
Abgasemissionswert entsprechen soll. Ein Soll-Ist-Vergleich wird erwähnt.
Bei einer Abweichung soll dann durch Eingriff am Gasmischer ein
Lambda-Sollwert erreicht werden - mit ungeklärten Konsequenzen für den
NOx-Istwert und in der Folge fragwürdiger Bedeutung des NOx-Sollwerts. Im
Betriebszustand 2 soll "auf andere Betriebsparameter zurückgegriffen"
werden, "um die Regelung vorzunehmen". Was nun letztendlich geregelt
werden soll ist auch hier unklar. Auf Seite 10 wird schließlich auch ein
Kennlinienfeld definiert. Dabei werden unbestimmte "Arbeitspunkte"
erwähnt und eine Abhängigkeit von Parametern, welche weder Lambda- noch
NOx-Werte umfassen. Ein aktueller Arbeitspunkt soll "durch Anpassung des
Gemischlambdas angefahren" werden. Eine in Anspruch 1 in Aussicht
gestellte Gemischdruckeinstellung zum Erreichen etwaiger Sollwerte
(möglicherweise Lambda oder NOx) bleibt ohne Beispiel. Auch aus anderen

Europäisches
Patentamt

European
Patent Office

Office européen
des brevets

**UNVOLLSTÄNDIGE RECHERCHE
ERGÄNZUNGSBLATT C**

Beschreibungspassagen kann nicht abgeleitet werden, wie die fraglichen Anspruchsmerkmale und Merkmale des Ausführungsbeispiels schlüssig und eindeutig zu einem nachvollziehbaren Verfahren kombiniert werden sollten. Es liegt vielmehr beim Leser der Anmeldeunterlagen, mögliche Lösungen zu erarbeiten und gegebenenfalls zu testen. In diesem Zusammenhang ist eine dem EPÜ genügende Offenbarung des Anmeldegegenstands höchst fraglich (Artikel 83 EPÜ).

Einwände gegenüber den weiteren unabhängigen Ansprüchen 11, 12, 15 und 16 ergeben sich analog und werden nicht weiter ausgeführt.

Die Beschreibung und die Ansprüche erfüllen die Erfordernisse der Klarheit nach Artikel 84 EPÜ nicht, denn sie verschleiern vor dem erfahrenen Leser, was der Anspruchsgegenstand und schließlich auch der Gegenstand der Recherche sein soll. Ein Gegenstand der alle Komponenten des Anspruchs 1 sinnvoll kombiniert, kann nicht eindeutig erfasst und darum auch nicht recherchiert werden (Regel 63 EPÜ und Richtlinien BVIII, 3).

Die Recherche wurde deshalb auf einen Gegenstand beschränkt, der dem Anspruch und dem Ausführungsbeispiel in gewisser Weise nahekommt und eine vernünftige Definition für das Schutzbegehren sein könnte. Dieser Gegenstand wird charakterisiert durch zwei Betriebszustände, wobei im ersten Betriebszustand eine Abgasemissions-Sollwertregelung und Kennfelderstellung unter Einbeziehung zusätzlicher Parameter durchgeführt wird, und wobei im zweiten Betriebszustand eine kennfeldbasierte Steuerung der Stellgrößen ohne Rückgriff auf einen erfassten Ist-Abgasemissionswert durchgeführt wird. Dabei beinhalten die Stellgrößen und Parameter über den Abgasemissionswert hinaus den Gemischdruck vor den Einlassventilen, ein "Leistungsäquivalent", und ein Verhältnis Lambda oder eine Treibstoffmenge.

**ANHANG ZUM EUROPÄISCHEN RECHERCHENBERICHT**
**ÜBER DIE EUROPÄISCHE PATENTANMELDUNG NR.**

EP 08 02 1784

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-06-2009

| Im Recherchenbericht angeführtes Patentdokument | | Datum der Veröffentlichung | Mitglied(er) der Patentfamilie | | Datum der Veröffentlichung |
|---|---|---|---|---|---|
| EP 1225330 | A | 24-07-2002 | AT | 411843 B | 25-06-2004 |
| | | | ES | 2260342 T3 | 01-11-2006 |
| | | | US | 2002092498 A1 | 18-07-2002 |
| EP 1602813 | A | 07-12-2005 | AT | 414265 B | 15-10-2006 |
| | | | AT | 343716 T | 15-11-2006 |
| | | | AT | 386200 T | 15-03-2008 |
| | | | EP | 1645741 A1 | 12-04-2006 |
| | | | ES | 2274498 T3 | 16-05-2007 |
| | | | ES | 2299944 T3 | 01-06-2008 |
| | | | JP | 2005337246 A | 08-12-2005 |
| | | | US | 2006011179 A1 | 19-01-2006 |
| | | | US | RE40431 E1 | 15-07-2008 |
| WO 8705360 | A | 11-09-1987 | AT | 384279 B | 27-10-1987 |
| | | | EP | 0259382 A1 | 16-03-1988 |
| | | | FI | 874616 A | 20-10-1987 |
| | | | JP | 3039189 B | 13-06-1991 |
| | | | JP | 63502680 T | 06-10-1988 |
| | | | US | 4867127 A | 19-09-1989 |
| EP 1561931 | A | 10-08-2005 | AT | 413738 B | 15-05-2006 |
| | | | JP | 2005220917 A | 18-08-2005 |
| | | | US | 2005177300 A1 | 11-08-2005 |
| EP 1387073 | A | 04-02-2004 | US | 2004024518 A1 | 05-02-2004 |
| WO 0159285 | A | 16-08-2001 | AU | 3353201 A | 20-08-2001 |
| | | | BR | 0108255 A | 05-03-2003 |
| | | | CA | 2398146 A1 | 16-08-2001 |
| | | | CN | 1460149 A | 03-12-2003 |
| | | | DE | 60115926 T2 | 10-08-2006 |
| | | | EP | 1320675 A2 | 25-06-2003 |
| | | | JP | 2004500514 T | 08-01-2004 |
| DE 10213341 | A1 | 09-10-2003 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0259382 B1
- EP 1225330 A2
- EP 1561930 A1
- EP 1561931 A1